# EUROPEAN PATENT APPLICATION

(11) **EP 2 306 163 A1**
(43) Date of publication of application: **06.04.2011**
(21) Application number: 09171723.1
(22) Date of filing: 30.09.2009
(51) Int. Cl.: G01G 19/12, G01G 23/01

(54) **Method and system for improving the accuracy of a weighing device of a material transporting means**

(71) Applicant: TAMTRON OY, 33561 Tampere (FI)
(72) Inventor: Asikainen, Pentti, 35800, Mänttä (FI)
(74) Representative: Kupiainen, Juhani Kalervo

(57) **Abstract**

This invention relates generally to a method and a system for improving the accuracy of a measurement device of a material transporting means. More particularly the present invention is directed to weighing devices, which are used for weighing of e.g. loose, grain, longitudinal piece, or liquid material in transportation equipment. The object of the invention is met by a solution, wherein in one embodiment the weighing of transported material is performed with first weighing means while loading, and with second weighing means while unloading. The weighing result of the first weighing means and the weighing result of the second weighing means are compared with each other and, if the deviation between the results of first and second weighing means exceeds a predetermined limit value, one of the weighing means is adjusted according to the other weighing means.

## Description

### FIELD OF THE INVENTION

This invention relates generally to a method and a system for improving the accuracy of a weighing device of a material transporting means. More particularly the present invention is directed to weighing devices, which are used for weighing of e.g. loose, grain, longitudinal piece, or liquid material in carrying means of transportation equipment.

### BACKGROUND OF THE INVENTION

Nowadays, material transporting means, such as dumpers, dump trucks and transfer dump trucks often include a weighing device for weighing material being transported. The weighing information is used for determining the amount of material being transported e.g. for debiting the material. Scales can also be used for other purposes, such as for facilitating the loading of suitable amount of material to a material transporting means in order to avoid overloading or transporting incomplete loads. The weighing information can also be used for controlling the vehicle. For example, the velocity of the vehicle may be controlled on the basis of the weight. Further, it is possible to use the weight values of individual loads for forecasting the servicing requirements of the vehicle.

Generally, a material transporting means has an open-box container, also known as a dump body, hinged at the rear end with a dumping shaft. The front of the dump body can be lifted up, usually by using a hydraulic lifting cylinder. Normally, weighing devices, including pressure sensors or strain gauge transducers, are used to weigh material in the dump body. The weighing devices are located in several locations in the material transporting means, for example one or more shaft sensors on the dumping shaft and at least one pressure sensor between the dump body and a chassis of the material transporting means. It is also possible that one or more weighing devices, such as pressure sensors, are positioned at the lifting cylinder to measure the liquid pressure in the cylinder while dumping the load.

Typically, material transporting means is loaded by using transfer means, such as wheel loaders, excavators or forklifts, which also might have a weighing device included. However, the weighing of a load is desired to be performed in material transporting means as well in order to avoid overloading and to increase the reliability of debiting, for example.

While loading the material transporting means, the dump body is normally in its down position, i.e. a load bearing structure of the dump body lies on the chassis and/or the centering structure of the material transporting means. In that case the load is weighed with the weighing devices positioned between the dump body and the chassis as well as with weighing devices on the dumping shaft. When the load is dumped, the dump body is raised by the hydraulic lifting cylinder and the load is reweighed by weighing devices positioned at the lifting cylinder and on the dumping shaft.

Some disadvantages are related to the above mentioned method for weighing the material during loading. For example, the weighing performed during loading can be unreliable, because the weighing devices between the dump body and the chassis are disposed to impacts caused by material being loaded, big rocks for example, and thus the weighing devices are vulnerable to become gradually inaccurate. Moreover, the weighing devices between the dump body and the chassis are under stress during the material transportation, because the dump body naturally is kept in its down position while transporting the load. This will increase even more the stress inaccuracy of the weighing devices between the dump body and the chassis.

The patent EP 1612524 A2 discloses a weighing apparatus for a load in a vehicle, wherein the load is weighted by lifting it slightly, whereby weighing sensors are located at the lifting structure. However, this arrangement is not easy to implement for transporting means meant for transporting heavy material, such as dumpers and dump trucks, because it is difficult to a robust enough construction of the system for such heavy loads.

### SUMMARY OF THE INVENTION

The objective of the present invention is to avoid or at least alleviate the aforesaid defects of prior art solutions and to achieve a solution by which a more accurate weighing is achieved.

The object of the invention is met by a solution, wherein the weighing of material to be transported is performed with first weighing means while loading, and with second weighing means while unloading/lifting a carrying means. The weighing result of the first weighing means and the weighing result of the second weighing means are optionally compared with each other and, at least one parameter of one of the weighing means is adjusted on the basis of the result of the other weighing means. In one embodiment the adjustment is provided if the deviation between the weighing results of first and second weighing means exceeds a predetermined limit value.

Accordingly, in one aspect a method for improving weighing accuracy in a weighing process, wherein a load of transported material on a carrying means of a material transporting means is weighed with first and second weighing means, is **characterized in that** the method has at least the following phases:
- the load is weighed with first weighing means when the carrying means is in a resting position,
- the load is weighed with first weighing means when the carrying means is in a lifted position, and
- at least one measurement parameter of one of the first and second weighing means is adjusted on the basis of the weighing result of the other of the first and second weighing means.

In another aspect of the invention a weighing system for weighing a load of a material transfer means, which material transfer means has means for carrying the load, and means for dumping the load out from the load carrying means, is **characterized in that** the system comprises:
- a first weighing means for weighing the load when the load carrying means is in a resting position,
- a second weighing means for weighing the load while lifting the load carrying means of the material transporting means,
- means for adjusting at least one measurement parameter of one of the first and second weighing means on the basis of the weighing result of the other of the first and second weighing means.

When weighing the load during the lifting of load carrying means it is useful that the carrying means is in the same position/inclination each time when the weighing is performed in order to achieve accurate and repeatable weighing results. This can be achieved by providing a threshold transducer or an angle measurement sensor in the carrying means or the lifting device. By using such a transducer/sensor it is possible to control the weighing to be performed when the carrying means is in a predetermined position. It is possible that the weighing is performed dynamically during the lifting movement of the carrying means, or that the carrying means is stopped at the predetermined location of the weighing, and the weighing is performed during standstill of the carrying means.

Weighing means are commonly zeroed when the carrying means is empty. This is performed by providing a similar weighing of empty carrying means, and setting the weighing result to become zero. It is useful to check that the carrying means have been emptied before performing the zeroing. This checking can be done with the angle measurement sensor or a second threshold transducer installed in the carrying means or the lifting device. This transducer/sensor can then be used during the dumping for detecting/securing that the carrying means has achieved a sufficient inclination needed for the carrying means to become empty, and for automatically zeroing the weighing means.

The utility of the present invention arises from plurality of issues. The invention provides an effortless way to improve the accuracy of weighing devices of transportation means, which may otherwise gradually fall under state of insufficient accuracy. In this invention, the reference weighing means are always present and the adjustment of the weighing devices can be automatically tuned as often as is needed. The adjustment may be done automatically in conjunction with every loading and dumping and, moreover, the weighing means to be adjusted can be selectable. This might facilitate for instance tuning of two weighing means, when it is possible to use precision loads for the direct tuning of only one of the weighing means, whereby the tuning is performed with the adjustment procedure to the other weighing means.

In this patent application, the material transporting means refers at least to all kinds of vehicles having a container, i.e. the dump body, for material being transported. The dump body is hinged from one side and there is means for lifting it so that the dump body can be dumped. Typically, the material transporting means are utilized for transporting heavy loads, such as rocks, loose, grain, longitudinal, piece, or liquid material.

The expression "first weighing means" refers herein to all kinds of weighing devices used to weigh material in the dump body of the material transporting means when the dump body is in its resting position, i.e. when the load bearing structure of the dump body lies on the chassis and/or the centering structure of the material transporting means and weight of the load in the dump body is directed to the chassis and/or the centering structure of the material transporting means.

The expression "second weighing means" refers herein to all kinds of weighing devices used to weigh material in the dump body of the material transporting means when the dump body is raised by the lifting cylinder so that the load bearing structure of the dump body becomes separate from the chassis and/or the centering structure of the material transporting means.

In addition, in this patent application weighing means and weighing devices refer to all kinds of devices used for weighing of e.g. loose, grain, longitudinal piece, or liquid material in e.g. transportation equipment.

Various embodiments of the present invention are disclosed in the dependent claims.

### BRIEF DESCRIPTION OF THE DRAWINGS

Next the invention will be described in more detail with reference to the following drawings:
Fig. 1 illustrates a dumper according to prior art;
Fig. 2a illustrates a side view of a material transporting means and an example of first and second weighing means of it;
Fig. 2b illustrates a top view of a material transporting means and an example of first and second weighing means of it;
Fig. 3 is a block diagram of the system for adjusting one of the weighing means in accordance with the present invention;
Fig. 4 is a flow diagram of one method according to the present invention for adjusting one of the weighing means on the basis of the other weighing means.

### DETAILED DESCRIPTION OF THE EMBODIMENTS

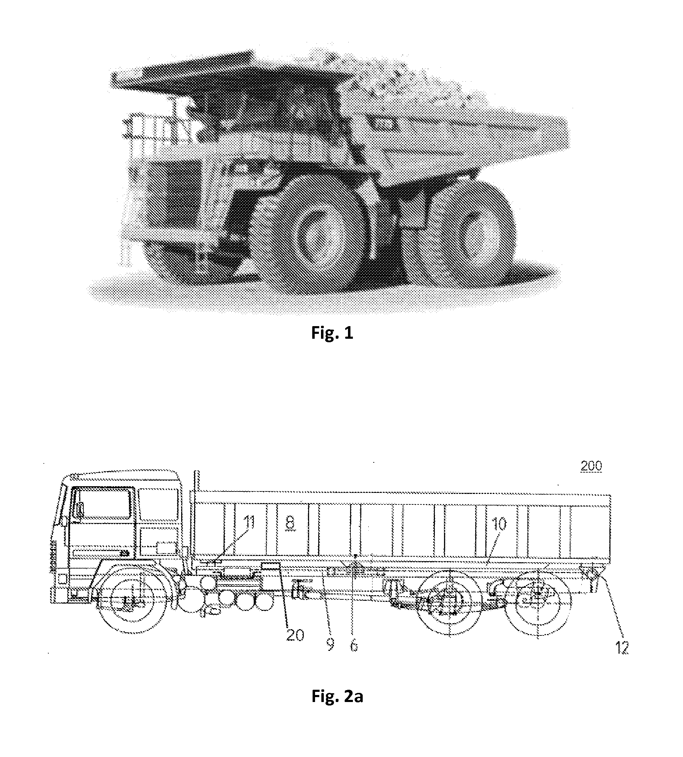

Figure 1 illustrates a dumper according to the prior art. The dumper in the Figure 1 is meant to be exemplary only and not to restrict the invention by any means. The present invention is directed to a material transporting means with heavy loads, such as dumper and dump trucks just to mention a few examples. Generally, the weight of the load may be e.g. from few tons up to 100 tons, but there are material transporting means, which have transporting capacity over that. The material transporting means is equipped with an open-box container, i.e. a dump body, for the material being transported. The dump body is hinged from one of its sides or rear so that the unloading is possible to perform by lifting the dump body from opposite side of the hinge with some lifting means. Typically, the rear end of the dump body is hinged and the lifting means is placed to the front thereof, in the direction of the vehicle. The present invention does not exclude other ways to hinge the dump body and to lift it for an unloading. Thus it is possible that the dump body is hinged from its side, and is dumped to the side of the vehicle. It is even possible that there are hinges both at the side(s) and rear of the vehicle together with controllable locking mechanisms, whereby the dumping direction of the dump body can be selected.

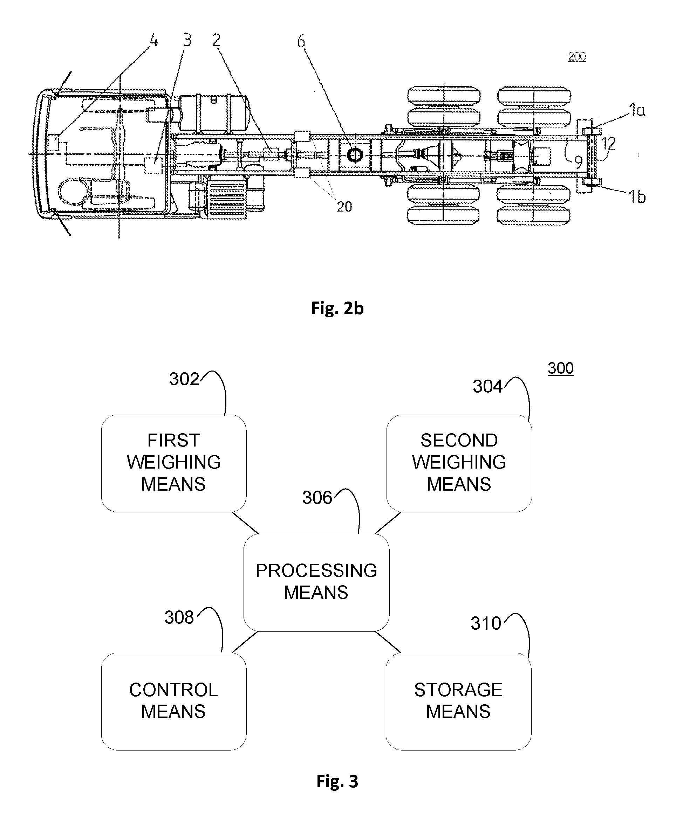

Figures 2a and 2b illustrate a side and a top view of a material transporting means, in this case a dump truck, with weighing devices installed in it. The material transporting means has a dump body 8, which is dumped about a dumping shaft 12. In the transporting means of the Figures, the dumping shaft is transverse to the longitudinal direction of the vehicle, located in the rear of the material transporting means. However, it may also be located at the side of the vehicle, in longitudinal direction of the vehicle.

This dumping shaft 12 is fixedly attached to the chassis 9 of the material transporting means. The dumping of the dump body 8 is in this case performed by means of a hydraulic lifting cylinder 6, which is at a distance from the dumping shaft 12 in the longitudinal direction of the vehicle. During driving, a load-bearing structure 10 of the dump body such as beams rest on the chassis 9. The front end of the dump body 8, which is thus the opposite end of the dump body in relation to the dumping shaft 12, is supported by a centering structure 11. Further, the weighing means are connected to the processing means 3, and the weighing results may be shown at a display, which is part of the control means 4.

When it is desired to empty the dump body 8, the pressure in the hydraulic cylinder 6 is raised, whereupon the length of the cylinder structure increases and the dump body pivots about the dumping shaft 12. The dump body being at a considerably large angle, often approx. 45 DEG, it becomes emptied from the loaded material.

The weighing devices can be located in several alternative locations in the material transporting means comprising first and second weighing means. For example, in Figure 2b there are two weighing devices 1a and 1b, such as shaft sensors, on the dumping shaft 12, one weighing device 2, such as a pressure gauge or strain gauge, installed to measure the pressure of the fluid volume in the hydraulic cylinder 6, and two weighing devices 20, such as strain gauge transducers, between the dump body 8 and the chassis 9 attached on the chassis 9 e.g. by bolts. These aforesaid weighing devices 1a, 1b and 20 serve as the first weighing means. The second weighing means include a weighing device 2 in conjunction with the hydraulic cylinder 6 and weighing devices 1a and 1b on the dumping shaft.

It will be apparent to those skilled in the art that the number and the locations of weighing devices in a material transporting means may vary and the material transporting means may encompass different types of weighing devices. For example, if the material transporting means has two lifting cylinders, there may be a weighing device in both cylinders. In addition, there can be more than two weighing devices between the dump body 8 and the chassis 9 and the weighing devices may differ from each other by their type and usage. In one embodiment there may be only one weighing device between the dump body and the chassis, positioned for example on the centering structure 11. The weighing means may also provide, in addition to total weight of the load, information about the axle weights or weights on each wheel or each wheel set, for example.

The weighing with the first weighing means 1a, 1b and 20 is performed while loading. At the time of weighing, the dump body is in its down position, i.e. the load bearing structure 10 of the dump body lies on the chassis 9 and/or on the centering structure 11 of the material transporting means. Thus the weight of the load is directed to the chassis 9 and/or to the centering structure 11 as well as to the dumping shaft 12.

Respectively, when the weighing with the second weighing means 1a, 1b and 2 is desired to be carried out, the lifting cylinder 6 raises the dump body 8 and separates the load bearing structure 10 of the dump body from the chassis 9 and/or from the centering structure 11. Thus the weight of the load is directed to the lifting cylinder 6 and to the dumping shaft 12. It is possible to use all sensors of the weighing means for the weighing, or just part of the sensors. For example, if some of the sensors is inoperative it is possible to perform the measurement by only using the operative sensors. The raising by the lifting cylinder 6 required for the weighing is less than what is required for dumping, so that the weighing can be performed without/before the dumping effect.

Figure 3 is a block diagram of the system for adjusting one of the weighing means in accordance with the present invention. The system comprises first weighing means 302, second weighing means 304, processing means 306, control means 308 and storage means 310.

As it was described above, the first weighing means 302 includes weighing devices between the dump body of the material transporting means and the chassis and/or the centering structure as well as the weighing devices on the dumping shaft. Respectively, the second weighing means 304 is composed of weighing device(s) in conjunction with the hydraulic cylinder and weighing devices on the dumping shaft. The weighing devices of the hydraulic cylinder can be pressure sensors, for example. As another alternative, it is possible to use strain gauge transducers which are located between the chassis and the end of the hydraulic cylinder / dumping device.

The data transfer between the weighing devices and the processing means may be implemented with commonly known wired or wireless technology. The weighing devices may have a transceiver or a transmitter and/or a receiver for data transfer and for receiving instruction from the processing means relating to, for example, the adjustment of a weighing device and/or instruction to perform weighing. Both weighing means and/or individual weighing devices can be controlled and adjusted by the user with control means 308 or by the processing means 306.

Further, the processing means 306 comprises at least one processor, such as one or more microprocessors, micro-controllers, DSP's (digital signal processor), programmable logic chips, etc., or any desired combination thereof. In addition, the processor may comprise a plurality of cooperating processors or sub-processors. The processing means 306 is configured to execute the code stored in a storage means 310, which may imply processing instructions and data relative to the weighing means and/or weighing devices of the material transporting means and optionally other functionalities, such as OS related functionalities, I/O-related functionalities, and other applications.

Typically, the control means 308 is a remote control means 308, which may be placed in the cab of the material transporting means or in some other place. In one embodiment there may be several control means located in different places. In another embodiment weighing means and/or weighing devices in several material transporting means may be controlled from one palace with one or more control means. In that case the data transfer is usually implemented in wireless way. The control means 308 may contain a user interface for controlling the weighing means and/or weighing devices. Typically, the user interface may comprise a display or a connector to an external display, and a keyboard/keypad or other applicable control input means (e.g. touch screen or voice control input, or separate keys/buttons/knobs) configured so as to provide the user of the system of the weighing means with practicable data visualization and control means for weighing means and/or weighing devices.

Furthermore, the storage means 310 may be divided between one or more physical memory chips or other memory elements, and it may comprise code, e.g. in a form of a computer program/application for the metering unit, and other data. Moreover, the storage means 310 may further include other storage media, such as a preferably detachable memory card, a floppy disc, a CD-ROM, fixed storage medium such as hard drive. The storage means 204 may be non-volatile, e.g. ROM, PROM, EEPROM or flash memory, and/or volatile, e.g. RAM, by nature.

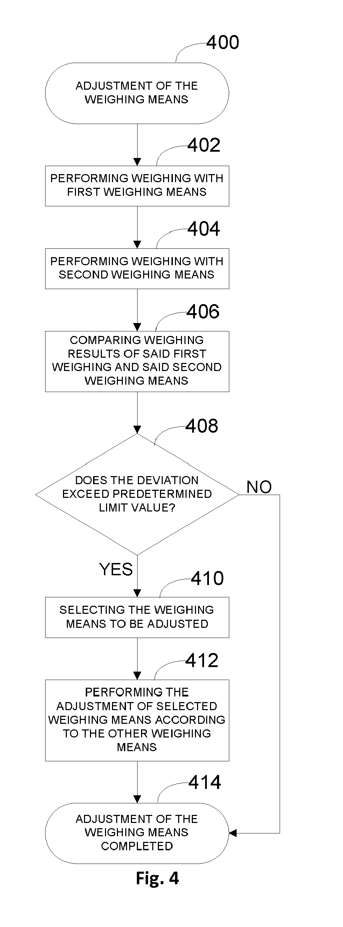

Turning now to Figure 4, Figure 4 is a flow diagram of one method according to the present invention for adjusting one of the weighing means according to the other weighing means 400. The adjustment of one of the weighing means can be connected with material transporting so that the weighing results of the weighing means is compared and, if needed, adjusted in pursuance of dumping the dump body of the material transporting means. Naturally, this requires the weighing to be performed in conjunction with a loading and an unloading as well.

First in phase 402 the weighing is performed by using first weighing means. The weighing with the first weighing means requires that the load bearing structure of the dump body is on the chassis and/or on the centering structure of the material transporting means so that the weight of the load in the dump body is directed, via the load bearing structure, to the chassis and/or centering structure of the material transporting means as well as to the dumping shaft.

Next, the weighing is performed with the second weighing means in phase 404. Usually this weighing is carried out right before dumping the dump body of the material transporting means, but it is possible to accomplish right after the weighing with the first weighing means. The weighing with the second weighing means requires that the dump body is raised by the lifting cylinder(s) so that the weight of the load is totally directed to the lifting cylinder(s) and to the dumping shaft.

It will be apparent to those skilled in the art that the weighing is possible to perform in reverse order, i.e. the weighing is carried out first with the second weighing means and the with the first weighing means.

In phase 406, the weighing results of the first weighing means and the second weighing means are compared. Generally, the comparison is accomplished by the processing means, but it is possible to implement the comparison manually, for example by presenting the results of the first weighing and the second weighing on the display of the control means, where a user can compare the results.

In one embodiment the comparison is not performed, but instead one of the weighing means is adjusted on the basis of the results of the other weighing means independently of such comparison, thus performing phase 412 without performing phases 406-408. Yet in another embodiment, the user is informed after first and second weighing about the weighing results and the possible adjustment may be carried out by the user. The information of the weighing results can be most conveniently presented on the display of the controlling means, but some other ways may also be used, such as voice signal indicating the existence of the deviation, for example.

In the method of Figure 4 it is next estimated/checked in phase 408, whether the deviation between the weighing results exceeds predetermined value. The predetermined value may be set by the user and it can be for example 1 - 50 kg, preferably e.g. 5-10 kg. In some other embodiment the predetermined value is omitted and the adjustment is carried out every time the deviation exists. In that case the existence of the deviation is dependent of the measuring accuracy of the weighing devices and if the devices do not share the same accuracy, the existence of the deviation may be evaluated according to a weighing device with least measuring accuracy.

If the deviation does not exceed the predetermined value or the deviation does not exist, the adjustment of the weighing means is completed 414. Else if the deviation exceeds the predetermined value or the deviation exist, the weighing means to be adjusted is selected, at phase 410, and it is adjusted according to the other weighing means at phase 412. However, it is also possible to carry out the selection of weighing means at an earlier phase and/or there may be a preset weighing means to be adjusted. Preferably, the weighing means to be adjusted is the first weighing means used for weighing the material during loading because the weighing devices between the dump body and the chassis tend to become inaccurate in short time of usage. It is also possible to make the adjustment on the basis of several measurements. For example, the number of required measurements may be predetermined, the results of each measurement is stored, and after performing the predetermined number of measurements the adjustment is made on the basis of the stored measurement results. The adjustment can be based on e.g. the average deviation calculated from the measurement results.

The adjustment of a weighing device usually means adjusting a tuning parameter which affects the relation between the amplitude value of the signal received from weight sensors and the weighing result given by the weighing device.

In addition, there might be a need to adjust the second weighing means on the basis of the first weighing means, for instance facilitating the tuning. The tuning of weighing means may be performed in any known way, for example, by using material with known weight, e.g. precision weights, or by using another scale for loading, e.g. wheel loader equipped with a scale, or by weighing the material transporting means first without a load and the with the load. The second weighing means can be adjusted according to the first weighing means after tuning the first weighing means and to avoid the tuning process of the second weighing means. Naturally, it is also possible to tune the second weighing means and adjust the first weighing means on the basis of the second weighing means.

The adjustment of the weighing means can be performed manually or automatically. In embodiments, in which the adjustment is performed automatically, the processing means adjust the selected weighing means according to the other weighing means. In this case the weighing means to be adjusted may be preset or the processing means may inquire of the user about the weighing means to be adjusted The manual adjustment may be carried out so that the user selects the weighing means to be adjusted and adjusts the selected weighing means by using the control means. In this case the weighing means to be adjusted may be preset as well. Alternatively, the processing means may give an indication of a need for the adjustment and the adjustment process is carried out by some other way.

Finally, the adjustment of the weighing means is completed, phase 412. In this phase it is possible, as well as earlier, to store data, such as weighing results or adjustment information, in the storage means for later use and/or controlling.

In action, it may be possible to achieve e.g. 0,1%-0,5% actual accuracy of the total capacity of the adjusted weighing means with the present invention. With total capacity of 100 tons, for instance, that means the accuracy of 100-500kg.

The scope of the patent will be defined by the appended claims. Skilled persons will appreciate the fact that various changes and modifications may be made to the explicitly disclosed embodiments and features thereof without diverging from the scope as set forth in the claims.

For example, it should be noted that the first and second weighing means may include both common parts and separate parts. For example, the weight sensors at the dumping shaft may be common to both weighing means, whereby the other weight sensors may be separate. The processing and controlling means may also be separate or common to both weighing means.

## Claims

1. Method for improving weighing accuracy in a weighing process, wherein a load of transported material on a carrying means of a material transporting means is weighed with first and second weighing means, **characterized in that** the method has at least the following phases:
- the load is weighed with first weighing means when the carrying means is in a resting position,
- the load is weighed with first weighing means when the carrying means is in a lifted position, and
- at least one measurement parameter of one of the first and second weighing means is adjusted on the basis of the weighing result of the other of the first and second weighing means.

2. Method according to claim 1, **characterized in that** weighing results of said first weighing means and said second weighing means are compared with each other, deviation between said two results is determined, and the adjustment of said parameter is performed on the basis of the value of the deviation.

3. Method according to claim 2, **characterized in that** the value of the deviation is compared with a predetermined threshold value, and the adjustment is performed only if said the absolute value of the deviation exceeds the predetermined threshold value.

4. Method according to any preceding claim, **characterized in that** a user is informed on values of the weighing results and/or deviation.

5. Method according to any preceding claim, **characterized in that** the weighing means being adjusted is selected by a user.

6. Method according to any preceding claim, **characterized in that** the weighing means being adjusted is preset.

7. Method according to any preceding claim, **characterized in that** the adjustment is initiated by a user.

8. Method according to any preceding claim, **characterized in that** the load to be weighed is loose, grain, longitudinal, piece or liquid material.

9. A weighing system for weighing a load of a material transfer means, which material transfer means has means for carrying the load, and means for dumping the load out from the load carrying means, **characterized in that** the system comprises:
- a first weighing means for weighing the load when the load carrying means is in a resting position,
- a second weighing means for weighing the load while lifting the load carrying means of the material transporting means,
- means for adjusting at least one measurement parameter of one of the first and second weighing means on the basis of the weighing result of the other of the first and second weighing means.

10. Weighing system according to claim 9, **characterized in that** the system comprises:
- processing means for obtaining results from a first weighing with the first weighing means and the a second weighing with the second weighing means, and for comparing the weighing result of the first weighing means and the weighing result of the second weighing means with each other,
- means for adjusting at least one parameter one of the weighing means on the basis of the weighing result obtained from the second weighing means.

11. System according to claim 10, **characterized in that** it comprises means for comparing the deviation value with a predetermined threshold value, whereby the system is arranged to perform the adjustment only if said the absolute value of the deviation exceeds the predetermined threshold value.

12. System according to any of claims 9 - 11, **characterized in that** it comprises means for informing the user on values of the weighing results and/or deviation.

13. System according to any of claims 9-12, **characterized in that** it comprises means for the user selection of weighing means to be adjusted.

14. System according to any of claims 9-13, **characterized in that** it comprises user means for initiating the adjustment by a user.

15. System according to any preceding claim, **characterized in that** the load to be weighed is loose, grain, longitudinal, piece or liquid material.
